# EUROPÄISCHE PATENTANMELDUNG

(11) **EP 2 127 571 A1**
(43) Veröffentlichungstag der Anmeldung: **02.12.2009**
(21) Anmeldenummer: 09158369.0
(22) Anmeldetag: 21.04.2009
(51) Int. Cl.: A47J 31/36, A47J 31/46

(54) **Vorrichtung zur Zubereitung von Getränken**

(30) Priorität: 27.05.2008 DE 202008007132 U
(71) Anmelder: MELITTA HAUSHALTSPRODUKTE GmbH & Co. Kommanditgesellschaft, D-32427 Minden (DE)
(72) Erfinder: AENGENHEYSTER, Dr. Gerald, 32427, Minden (DE); WEINREICH, Steffen, 32427, Minden (DE)
(74) Vertreter: Dantz, Jan Henning

(57) **Zusammenfassung**

Eine Vorrichtung zur Zubereitung von Getränken, insbesondere von Kaffee, mit einem Wasserreservoir (2), aus dem kaltes Wasser (3) über eine erste Pumpe (6) zu einer Heizeinrichtung (9) und einer ersten Brühkammer (11) förderbar ist, wobei die Brühkammer (11) für einen ersten Brückdruck ausgelegt ist und ein Auslassventil (12) zur Ausgabe des Brühgetränkes aufweist, wobei eine zweite Brühkammer (14) vorgesehen ist, die für einen zweiten Brühdruck ausgelegt ist, der höher als der erste Brühdruck ist, und ein Hochdruckauslassventil (15) zur Ausgabe eines Brühgetränkes aufweist, oder die erste Brühkammer (11) für einen Brühvorgang wahlweise durch die erste Pumpe (6) oder eine zweite Pumpe (7) mit unterschiedlichem Brühdruck mit heißem Wasser versorgt wird.

## Beschreibung

Die vorliegende Erfindung betrifft eine Vorrichtung zur Zubereitung von Getränken, insbesondere von Kaffee, mit einem Wasserreservoir, aus dem kaltes Wasser über eine erste Pumpe zu einer Heizeinrichtung und einer ersten Brühkammer förderbar ist, wobei die Brühkammer für einen ersten Brühdruck ausgelegt ist und ein Auslassventil zur Ausgabe des Brühgetränkes aufweist.

Aus der EP 1 625 814 ist eine Vorrichtung zum Brühen von Kaffee bekannt, bei der aus einem Wasserreservoir kaltes Wasser mittels einer Pumpe zu einer Heizeinrichtung und anschließend in eine Brühkammer eingeleitet wird. Die Brühkammer ist für einen vorbestimmten Brühdruck ausgelegt und kann mit Kaffeemehl befüllt werden. Das Brühen des Kaffees erfolgt bei relativ niedrigen Drücken die meist zwischen 1 bis 3 bar liegen. Solche Vorrichtungen haben sich für das Brühen von Kaffee an sich bewährt.

Bei am Markt erhältlichen Kaffeeautomaten ist es häufig möglich, die Flüssigkeitsmenge für den Brühvorgang und auch die Stärke des Brühgetränkes durch Dosierung der Menge an Kaffeemehl einzustellen. Soll mit einer solchen Vorrichtung hingegen Espresso gebrüht werden, stoßen diese Geräte jedoch an ihre Grenzen. Denn für einen Espresso sind Brühdrücke von 8 bis 9 bar erforderlich. Dafür sind die Kaffeeautomaten sowohl hinsichtlich der Pumpenleistung als auch hinsichtlich der Brühkammer nicht ausgelegt. Auch wenn in vielen Anzeigefeldern eine geringe Brühmenge als "Espresso" bezeichnet wird, handelt es sich nur um einen normalen gebrühten Kaffee mit geringer Flüssigkeitsmenge. Ein hochwertiger Espresso wird bei weitaus höheren Brühdrücken hergestellt.

Es ist daher Aufgabe der vorliegenden Erfindung eine Vorrichtung zur Zubereitung von Getränken zu schaffen, die unterschiedliche Brühgetränke mit hoher Qualität herstellen kann.

Diese Aufgabe wird mit einer Vorrichtung zur Zubereitung von Getränken mit den Merkmalen des Anspruches 1 gelöst.

Bei der erfindungsgemäßen Vorrichtung ist neben der ersten Brühkammer eine zweite Brühkammer vorgesehen, die für einen zweiten Brühdruck ausgelegt ist, der höher als der erste Brühdruck ist, wobei ein Hochdruckauslassventil zur Ausgabe eines Brühgetränkes an der zweiten Brühkammer vorgesehen ist. Alternativ kann auch die erste Brühkammer wahlweise durch die erste Pumpe oder eine zweite Pumpe mit unterschiedlichem Brühdruck mit heißem Wasser versorgt werden. Durch die Anordnung von zwei getrennten Brühkammern oder die Schaltung der Brühwasserversorgung über unterschiedliche Pumpen kann ein unterschiedlicher Brühdruck bereitgestellt werden, um verschiedene Brühgetränke herzustellen. So ist es insbesondere möglich, bei höheren Brühdrücken einen qualitativ hochwertigen Espresso herzustellen, während das Brühen von normalem Kaffee (Cafe Creme) mit größerer Flüssigkeitsmenge bei einem niedrigerem Brühdruck in der ersten Brühkammer erfolgen kann. Der Verbraucher erhält dadurch die Möglichkeit, zwei unterschiedliche Brühgetränke mit einer einzigen Vorrichtung herzustellen.

Gemäß einer bevorzugten Ausgestaltung der Erfindung wird eine zweite Brühkammer über eine zweite Pumpe mit heißem Wasser versorgt. Denn für einen Brühvorgang mit einem hohen Brühdruck muss sowohl die Brühkammer als auch die fördernde Pumpe für einen so hohen Brühdruck ausgelegt sein.

Vorzugsweise ist die erste Brühkammer größer als die zweite Brühkammer ausgebildet. Denn gerade bei der Herstellung von Espresso werden meist nur kleine Volumen benötigt, so dass eine kleinere Brühkammer für den hohen Brühdruck ausgelegt ist. Mit der großen Brühkammer können größere Mengen von Kaffee gebrüht werden.

Die erste Brühkammer und das Auslassventil sind vorzugsweise für einen Druck von bis zu 4 bar ausgebildet. Meistens wird das Brühen von Kaffee bei Drücken zwischen 1 bis 3 bar vorgenommen. Die zweiten Brühkammer und das Hochdruckauslassventil sind hingegen für Drücke von mehr als 5 bar, vorzugsweise mehr als 7 bar ausgelegt. Meist wird Espresso bei 8 bis 9 bar gebrüht, so dass eine hochwertige Herstellung eines Espressogetränkes möglich ist.

Gemäß einer weiteren Ausgestaltung der Erfindung besitzt die zweite Pumpe ein geringeres Fördervolumen als die erste Pumpe. Dabei kann die zweite Pumpe einen Kolben umfassen, der durch Erwärmung eines ausdehnbaren Mediums betätigbar ist, wobei durch eine Bewegung des Kolbens eine Flüssigkeitsverdrängung stattfindet, die dem Fördervolumen der zweiten Pumpe entspricht. Das ausdehnbare Medium kann dabei durch heißes Wasser erwärmt werden, das durch die erste Pumpe gefördert wird. Das benötigte heiße Wasser kann zunächst an einem mit dem ausdehnbaren Medium befüllten Kolben vorbeigeleitet und dann in die zweite Brühkammer geführt werden. Sollte weitere Wärmeenergie für die vollständige Expansion des ausdehnbaren Mediums notwendig sein, kann weiteres heißes Wasser am Kolben vorbeigeleitet werden, jedoch ohne in die Brühkammer geleitet zu werden. Zudem ist es möglich, das ausdehnbare Medium nach der Erhitzung wieder durch kaltes Wasser zu kühlen, wenn die erste Pumpe kaltes Wasser zu der zweiten Pumpe fördert. Die erste Pumpe kann bei dieser Ausführung für solch niedrige Brühdrücke von 1-3 bar ausgelegt sein, wie sie in den handelsüblichen Kaffeeautomaten oder PAD-Geräten vorkommen. Somit kann sie kleiner und kostengünstiger sein als die in herkömmlichen Espressogeräten verwendeten Pumpen.

Eine weitere bevorzugte Ausführungsform der Erfindung sieht lediglich eine Brühkammer vor. Diese ist sowohl für das Brühen von Kaffee bei 1 bis 3 bar geeignet als auch für Drücke von mehr als 5 bar, vorzugsweise mehr als 7 bar. Bei Brühdrücken von 1-3 bar ist es möglich, lediglich Wasser mit der ersten Pumpe zu fördern. Sollen Brühungen bei höheren Drücken über 5 bar erfolgen, kann die zweite Pumpe durch Fördern von heißem Wasser durch die erste Pumpe aktiviert werden. Weiterhin kann die Gestaltung der Brühkammer so erfolgen, dass das Volumen der Brühkammer variabel einstellbar ist, beispielsweise durch Verringerung bzw. Vergrößerung des Volumens durch Verschieben eines Kolbens.

Vorzugsweise umfasst die Vorrichtung ein Mahlwerk, das wahlweise die erste Brühkammer oder die zweite Brühkammer befüllen kann. Dabei kann vor dem Mahlwerk ein Füllbehälter für Kaffeebohnen vorgesehen sein, der mindestens zwei getrennte Kammern zur Befüllung mit unterschiedlichen Typen von Kaffeebohnen aufweist. Dadurch kann der Benutzer durch eine entsprechende Schalteinrichtung einen Kaffeebohnentyp auswählen, der dann über das Mahlwerk der ersten oder zweiten Brühkammer zugeführt wird.

Eine andere mögliche Ausführungsform sieht das Befüllen der Brühkammer durch den Benutzer mit PADs, Kapseln, Portionspackungen oder mit Kaffeemehl vor.

Gemäß einer weiteren Ausgestaltung der Erfindung wird der höhere Brühdruck in der zweiten Brühkammer durch eine Steuerung bewirkt, die auf die erste Pumpe einwirkt, damit diese einen höheren Ausgangsdruck erzeugt. Beispielsweise kann die erste Pumpe mit einer höheren Umdrehungszahl betrieben werden oder es können andere Schaltungen zur Veränderung des Brühdruckes vorgesehen sein.

Die Erfindung wird nachfolgend anhand eines Ausführungsbeispieles mit Bezug auf die beigefügten Zeichnungen näher erläutert. Es zeigt:

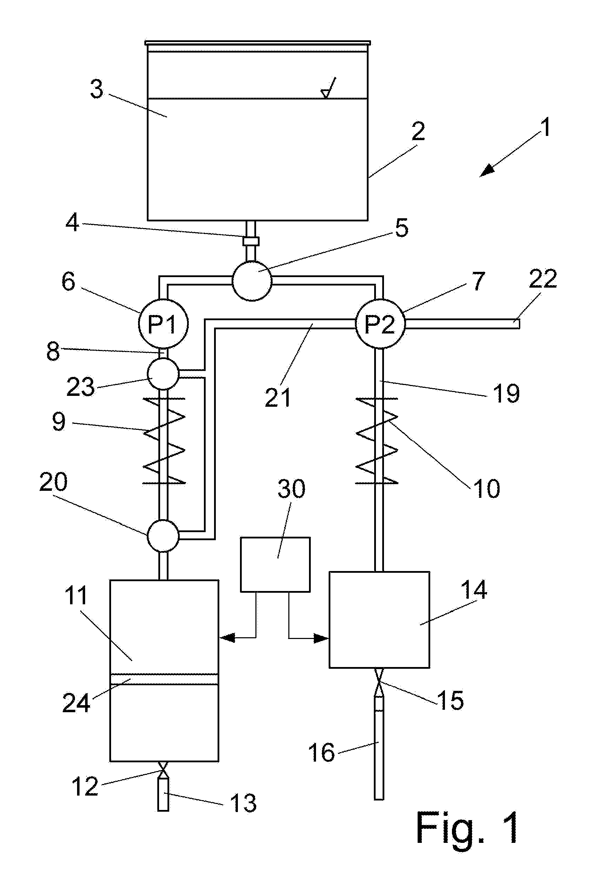

- Figur 1: ein Blockschaltbild einer Vorrichtung zur Zubereitung eines Getränkes.

Eine Vorrichtung 1 zur Herstellung eines Brühgetränkes umfasst ein Wasserreservoir 2, in dem kaltes Wasser 3 enthalten ist. Das Wasserreservoir 2 kann dabei abnehmbar ausgestaltet sein, um eine Befüllung zu vereinfachen.

Von dem Wasserreservoir 2 erstreckt sich eine Leitung 4 mit einem Anschluss zu einem Verteilerventil 5, das wahlweise eine Leitung zu einer ersten Pumpe 6 oder einer zweiten Pumpe 7 öffnet.

Zum Brühen von normalem Kaffe bei einem geringerem Brühdruck, wird über die erste Pumpe 6 kaltes Wasser durch eine Leitung 8 gefördert, die eine Heizeinrichtung 9, beispielsweise eine umgebende Heizspirale, durchläuft. Die Leitung 8 mündet an der ersten Brühkammer 11, in der Kaffeemehl, ein PAD oder eine Kapsel enthalten ist, so dass das erhitzte Wasser die Brühkammer 11 durchlaufen kann und an einem Ausgabeventil 12 zu einer Ausgabeleitung 13 gefördert wird. Dort kann das gebrühte Getränk dann in eine Tasse ausgegeben werden.

Wenn der Benutzer ein Brühgetränk herstellen will, das einen höheren Brühdruck erfordert, beispielsweise Espresso, der bei 8 bis 9 bar gebrüht werden soll, wird durch das Verteilerventil 5 das kalte Wasser zu der zweiten Pumpe 7 geleitet, die ein geringeres Fördervolumen als die erste Pumpe 6 besitzt. Die zweite Pumpe 7 fördert das Wasser durch eine Leitung 19, die von einer Heizeinrichtung 10 umgeben ist. Das erhitzte Wasser wird dann zu einer zweiten Brühkammer 14 geleitet, die für einen hohen Brühdruck ausgelegt ist. In der Brühkammer 14 befindet sich beispielsweise gemahlener Espressokaffee, ein Espresso-PAD oder. eine Espresso-Kapsel, so dass das heiße Wasser die Brühkammer 14 durchströmt und dann an einem Hochdruckausgabeventil 15 und einer Ausgabeleitung 16 an eine Tasse abgegeben werden kann. Eine weitere Möglichkeit ist die Zusammenführung der Ausgabeleitung 13 und der Ausgabeleitung 16, so dass am Gerät nur ein Auslass vorhanden ist. Die Brühkammer 14 kann dabei für Brühdrücke von 7 bis 10 bar, vorzugsweise 8 bis 9 bar ausgelegt sein.

Die zweite Pumpe 7 kann dabei einen Kolben umfassen, der durch Erwärmung eines ausdehnbaren Mediums, beispielsweise Wachs, betätigbar ist. Durch Erhitzung des Wachses wird der Kolben verschoben, und kann so durch eine Volumenverdrängung die Flüssigkeit fördern. Das schmelzbare Wachs eine möglichst niedrige Schmelztemperatur aufweist, die jedoch oberhalb der Umgebungstemperatur liegt, um die thermischen Verluste des Brühwassers möglichst gering zu gestalten. Diese Ausgestaltung der zweiten Pumpe 7 hat den Vorteil, dass die erste Pumpe 6 auch dazu verwendet werden kann, die zweite Pumpe 7 zu betätigen. Hierfür ist in der Leitung 8 nach der Heizeinrichtung 9 ein schaltbares Abzweigeventil 20 vorgesehen, das eine Durchleitung von heißem Wasser zu der zweiten Pumpe 7 ermöglicht. Das heiße Wasser kann dann über die Leitung 21 zu der Pumpe 7 gefördert werden. Ist zweite Brühkammer mit der für den Espresso benötigte Flüssigkeitsmenge befüllt, wird das für heiße, für die weitere Expansion des ausdehnbaren Mediums notwendige Wasser anschließend durch einen Auslass 22 abgegeben. Durch das Umströmen mit heißem Wasser kann das ausdehnbare Medium erhitzt und ausgedehnt werden, um die zweite Pumpe 7 zu betätigen. Nach dem Brühvorgang kann dann über die erste Pumpe 6 kaltes Wasser durch eine weitere Leitung oder die Leitung 21 zu der zweiten Pumpe 7 gefördert werden, um das ausdehnbare Medium zu kühlen. Hierfür kann das kalte Wasser über ein Ventil 23 vor der Heinzeinrichtung 9 aus der Leitung 8 entnommen werden.

Die beiden Brühkammern 11 und 14 können durch ein gemeinsames Mahlwerk 30 mit Kaffeemehl gespeist werden. Hierfür können oberhalb des Mahlwerkes 30 Kammern vorgesehen sein, die mit unterschiedlichen Typen von Kaffeebohnen befüllt werden. Das Mahlwerk erhält dann die ungemahlenen Kaffeebohnen aus einer entsprechenden Kammer und wird dann die erste Brühkammer 11 oder die zweite Brühkammer 14 befüllen. Weiterhin ist die Nutzung von mit Kaffeemehl befüllten PADs oder mit Kaffeemehl oder Konzentrat befüllten Kapseln möglich.

In dem dargestellten Ausführungsbeispiel sind zwei voneinander getrennte Pumpen 6 und 7 zum Fördern von Wasser zu der ersten Brühkammer 11 und der zweiten Brühkammer 14 vorgesehen. Es ist natürlich auch möglich, eine Pumpe vorzusehen, bei der über eine Steuerung unterschiedliche Ausgangsdrücke festgelegt werden können. Dann kann über eine Pumpe ein niedriges Druckniveau (1 bis 3 bar) und durch entsprechende Steuerung ein zweites Druckniveau (8 bis 9 bar) eingestellt werden.

Ferner kann in einer weitern Ausgestaltung der Erfindung die Brühkammer 11 1 auch durch die beiden Pumpen 6 und 7 mit heißem Wasser für einen Brühvorgang versorgt werden. Dann mündet die Leitung 19 nicht in der zweiten Brühkammer 14 sondern in der ersten Brühkammer 11. Das Volumen der Brühkammer 11 ist dann vorzugsweise durch einen verschiebbaren Kolben 24 verstellbar, so dass der Benutzer das Brühkammervolumen für den Brühvorgang verändern kann. Dann wird das Ventil 12 am Auslass 13 so gesteuert, dass wahlweise ein Brühvorgang bei einem niedrigem Druck (1-3 bar) oder einem hohen Druck (z.B. mehr als 5 bar) durchgeführt werden kann. Diese Ausgestaltung hat den Vorteil, dass die zweite Brühkammer 14 entfallen kann, allerdings die Steuerung aufwendiger gestaltet werden muss.

## Patentansprüche

1. Vorrichtung zur Zubereitung von Getränken, insbesondere von Kaffee, mit einem Wasserreservoir (2), aus dem kaltes Wasser (3) über eine erste Pumpe (6) zu einer Heizeinrichtung (9) und einer ersten Brühkammer (11) förderbar ist, wobei die Brühkammer (11) für einen ersten Brückdruck ausgelegt ist und ein Auslassventil (12) zur Ausgabe des Brühgetränkes aufweist, **dadurch gekennzeichnet, dass** eine zweite Brühkammer (14) vorgesehen ist, die für einen zweiten Brühdruck ausgelegt ist, der höher als der erste Brühdruck ist, und ein Hochdruckauslassventil (15) zur Ausgabe eines Brühgetränkes aufweist, oder die erste Brühkammer (11) für einen Brühvorgang wahlweise durch die erste Pumpe (6) oder eine zweite Pumpe (7) mit unterschiedlichem Brühdruck mit heißem Wasser versorgt wird.

2. Vorrichtung nach Anspruch 1, **dadurch gekennzeichnet, dass** die zweite Brühkammer (14) über eine zweite Pumpe (7) mit heißem Wasser versorgt wird.

3. Vorrichtung nach Anspruch 1 oder 2, **dadurch gekennzeichnet, dass** die erste Brühkammer (11) größer als die zweite Brühkammer (14) ausgebildet ist.

4. Vorrichtung nach einem der Ansprüche 1 bis 3, **dadurch gekennzeichnet, dass** die erste Brühkammer (11) und das Auslassventil (12) für einen Druck bis zu 4 bar ausgebildet sind.

5. Vorrichtung nach einem der Ansprüche 1 bis 4, **dadurch gekennzeichnet, dass** die zweite Brühkammer (14) und das Hochdruckauslassventil (15) für Drücke von mehr als 5 bar, vorzugsweise mehr als 7 bar ausgelegt sind.

6. Vorrichtung nach einem der Ansprüche 1 bis 5, **dadurch gekennzeichnet, dass** die zweite Pumpe (7) ein geringeres Fördervolumen als die erste Pumpe (6) besitzt.

7. Vorrichtung nach einem der Ansprüche 1 bis 6, **dadurch gekennzeichnet, dass** die zweite Pumpe (7) einen Kolben umfasst, der durch Erwärmung eines ausdehnbaren Mediums betätigbar ist.

8. Vorrichtung nach Anspruch 7, **dadurch gekennzeichnet, dass** das ausdehnbare Medium durch heißes Wasser erwärmbar ist, das durch die erste Pumpe (6) gefördert wird.

9. Vorrichtung nach Anspruch 7 oder 8, **dadurch gekennzeichnet, dass** das ausdehnbare Medium nach dem Erhitzen durch kaltes Wasser kühlbar ist, das durch die erste Pumpe (6) gefördert wird.

10. Vorrichtung nach einem der Ansprüche 7 bis 9, **dadurch gekennzeichnet, dass** das ausdehnbare Medium aus schmelzbarem Wachs, einem Wachs-Metall- Gemisch oder einem Wachs-Graphit-Gemisch gebildet ist.

11. Vorrichtung nach einem der Ansprüche 1 bis 9, **dadurch gekennzeichnet, dass** ein Mahlwerk (30) vorgesehen ist, das wahlweise die erste Brühkammer (11) oder die zweite Brühkammer (14) befüllen kann.

12. Vorrichtung nach Anspruch 10, **dadurch gekennzeichnet, dass** vor dem Mahlwerk (30) ein Füllbehälter für Kaffeebohnen vorgesehen ist, der mindestens zwei getrennte Kammern zur Befüllung mit unterschiedlichen Typen von Kaffeebohnen versehen ist.

13. Vorrichtung nach Anspruch 1, **dadurch gekennzeichnet, dass** der höhere Brühdruck in der zweiten Brühkammer (14) durch eine Steuerung erfolgt, mittels der die erste Pumpe (6) einen höheren Ausgangsdruck erzeugt.

14. Vorrichtung nach Anspruch 1, **dadurch gekennzeichnet, dass** die Vorrichtung lediglich eine Brühkammer (11) aufweist, die je nach erforderlichem Brühdruck durch die erste Pumpe oder die zweite Pumpe mit heißem Wasser versorgt wird.

15. Vorrichtung nach einem der vorhergehenden Ansprüche, **dadurch gekennzeichnet, dass** das Volumen der ersten Brühkammer (11) durch einen in der Brühkammer verschiebbaren Kolben (24) einstellbar ist.

16. Vorrichtung nach einem der vorhergehenden Ansprüche 1 bis 15, **dadurch gekennzeichnet, dass** die erste Brühkammer (11) so ausgebildet ist, dass sie mit PADs oder Kapseln befüllbar ist.

17. Vorrichtung nach einem der Ansprüche 1 bis 16, **dadurch gekennzeichnet, dass** die zweite Pumpe (7) ein Gehäuse umfasst, in der ausdehnbare Medium enthalten ist und ein Kolben verschiebbar in dem Gehäuse geführt ist.

18. Vorrichtung nach einem der Ansprüche 1 bis 17, **dadurch gekennzeichnet, dass** in der Zuleitung (8) zwischen der ersten Pumpe (6) und Heizeinrichtung (9) ein schaltbares Ventil (23) vorgesehen ist, um das kalte Wasser wahlweise durch die Heizeinrichtung (9) oder zu der zweiten Pumpe (7) zu leiten.

19. Vorrichtung nach einem der Ansprüche 1 bis 18, **dadurch gekennzeichnet, dass** das Brühgetränk wahlweise von der ersten Brühkammer (11) in einem ersten Auslass (13) und von der zweiten Brühkammer (14) durch einen zweiten Auslass (16) ausgebbar ist.

20. Vorrichtung nach einem der Ansprüche 1 bis 18, **dadurch gekennzeichnet, dass** die Ausgabeleitungen (13, 16) der ersten Brühkammer (11) und der zweiten Brühkammer (14) zusammengeführt sind und ein gemeinsamer Auslass für das Brühgetränk vorgesehen ist.
